(19)

Europäisches Patentamt

European Patent Office

Office européen des brevets

(11) **EP 2 312 802 A2**

(12) **EUROPEAN PATENT APPLICATION**

(43) Date of publication:
**20.04.2011 Bulletin 2011/16**

(51) Int Cl.:
***H04L 27/18*** (2006.01)      ***H04L 27/34*** (2006.01)

(21) Application number: **10187033.5**

(22) Date of filing: **08.10.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **19.10.2009 KR 20090099082**
           **05.11.2009 KR 20090106328**
           **17.09.2010 KR 20100092019**

(71) Applicant: **Electronics and Telecommunications Research Institute**
**Daejeon-city 305-350 (KR)**

(72) Inventors:
 • **Lim, Jong Soo**
 **Daejeon 301-831**
 **(KR)**
 • **Lee, JiBong**
 **Busan 616-763, (KR)**

 • **Yun, Joungil**
 **Daejeon 305-308 (KR)**
 • **Bae, Byungjun**
 **Daejeon 302-777 (KR)**
 • **Kim, Kwang-Yong**
 **Daejeon 305-751 (KR)**
 • **Song, Yun Jeong**
 **Daejeon 305-759 (KR)**
 • **Lee, Soo In**
 **Daejeon 302-120 (KR)**
 • **Hwang, Seungku**
 **Daejeon 305-350 (KR)**
 • **Ahn, Chieteuk**
 **Daejeon 305-761 (KR)**

(74) Representative: **Betten & Resch**
 **Patentanwälte**
 **Theatinerstrasse 8**
 **80333 München (DE)**

(54) **Apparatus and method for transmitting and receiving broadcasting signal**

(57)     A broadcasting signal transmitting method of a broadcasting signal transmitting apparatus is provided. According to the method, a base layer signal including a plurality of subchannels that include a base layer symbol is generated, and an enhancement layer signal including an enhancement layer symbol is generated. In a first subchannel corresponding to a section in which the enhancement layer signal has data among a plurality of subchannels, a hierarchical modulation symbol is generated by hierarchically modulating the base layer symbol and the enhancement layer symbol in accordance with a hierarchical modulation index. In a second subchannel corresponding to a section in which the enhancement layer signal does have not data among the plurality of subchannels, the base layer symbol is outputted. The broadcasting signal including the hierarchical modulation symbol of the first subchannel and the base layer symbol of the second subchannel is transmitted.

FIG. 1

**Description**

(a) Field of the Invention

The present invention generally relates to an apparatus and method for transmitting and receiving a broadcasting signal.

**(b) Description of the Related Art**

A broadcasting signal transmitter transmits broadcasting signals that are generated by adding enhancement layer signals for increasing the transmission capacity to base layer signals for transmitting a basic digital media broadcast service through hierarchical modulation.
Transmission characteristics according to the hierarchical modulation are determined by a hierarchical modulation index that defines a distance between a base layer symbol and an enhancement layer symbol on a constellation. Therefore, if the hierarchical modulation index is determined, all services in the broadcasting signals come to have the same hierarchical modulation characteristics, which makes it difficult to provide various characteristic services.

**SUMMARY OF THE INVENTION**

Embodiments of the present invention provide an apparatus and method for transmitting and receiving a broadcasting signal for providing broadcasting services having various characteristics.
According to an embodiment of the present invention, a method of transmitting a broadcasting signal in a broadcasting signal transmitting apparatus is provided. The method includes: generating a base layer signal including a plurality of subchannels, each of the subchannels including a base layer symbol; generating an enhancement layer signal including an enhancement layer symbol; generating a hierarchical modulation symbol by hierarchical modulation on the base layer symbol and the enhancement layer symbol in accordance with a hierarchical modulation index, in a first subchannel corresponding to a section in which the enhancement layer signal has data among the plurality of subchannels; outputting the base layer symbol, in a second subchannel corresponding to a section in which the enhancement layer signal does not have data among the plurality of subchannels; and transmitting a broadcasting signal including the hierarchical modulation symbol of the first subchannel and the base layer symbol of the second subchannel.
The method may include outputting the base layer symbol without performing the hierarchical modulation in the second subchannel.
In the method, the base layer symbol may be outputted through performing the hierarchical modulation on the base layer symbol and the enhancement layer symbol with the hierarchical modulation index of infinity.
The hierarchical modulation may be performed by adding, to the base layer symbol, a product of the enhancement layer symbol, a value which is inversely proportional to the hierarchical modulation index, and the base layer symbol.
The hierarchical modulation index may define a distance between the base layer symbol and the enhancement layer symbol.
The hierarchical modulation index may increase as the distance between base layer symbols increases, and may decrease as the distance between enhancement layer symbols increases.
The hierarchical modulation index may be defined in each of the plurality of subchannels.
The broadcasting signal may further include information on the hierarchical modulation index.
According to another embodiment of the present invention, a method of receiving a broadcasting signal in a broadcasting signal receiving apparatus is provided. The method includes receiving a broadcasting signal, outputting a hierarchical modulation signal by demodulating the broadcasting signal, and demodulating the hierarchical modulation signal to a base layer signal and an enhancement layer signal. Here, the hierarchical modulation signal includes a hierarchical modulation symbol that is generated by performing hierarchical modulation on the base layer symbol and the enhancement layer symbol in a first subchannel, and the base layer symbol of a second subchannel. The first subchannel corresponds to a section in which the enhancement layer signal has data among a plurality of subchannels, and the second subchannel corresponds to a section in which the enhancement layer signal does not have data among the plurality of subchannels.
According to yet another embodiment of the present invention, an apparatus for transmitting a broadcasting signal, including a base layer signal processor, an enhancement layer signal processor, a hierarchical modulator, and a transmitter is provided. The base layer signal processor generates a base layer signal including a plurality of subchannels, each of the subchannels including a base layer symbol, and the enhanced layer signal processor generates an enhanced layer signal including an enhanced layer symbol. The hierarchical modulator performs hierarchical modulation on the base layer symbol and the enhanced layer symbol in a first subchannel corresponding to a section in which the enhanced layer signal has data among the plurality of subchannels, and does not perform the hierarchical modulation on the base layer symbol and the enhanced layer symbol in a second subchannel corresponding to a section in which the enhanced layer signal does not have data among the plurality of subchannels. The transmitter transmits a broadcasting signal including output of the hierarchical modulator.

According to still another embodiment of the present invention, an apparatus for receiving a broadcasting signal including a receiver and a hierarchical demodulator is provided. The receiver outputs a hierarchical modulation signal by demodulating a received broadcasting signal, and the hierarchical demodulator demodulates the hierarchical modulation signal to a base layer signal and an enhanced layer signal, Here, the hierarchical modulation signal includes a hierarchical modulation symbol that is generated by performing hierarchical modulation on the base layer symbol and the enhancement layer symbol in a first subchannel, and the base layer symbol of a second subchannel. The first subchannel corresponds to a section in which the enhancement layer signal has data among a plurality of subchannels, and the second subchannel corresponds to a section in which the enhancement layer signal does not have data among the plurality of subchannels.

## BRIEF DESCRIPTION OF THE DRAWINGS

FIG. 1 is a schematic block diagram showing a broadcasting signal transmitting apparatus according to an embodiment of the present invention.

FIG. 2A and FIG. 2B are base layer signal constellations, respectively.

FIG. 3A and FIG. 3B are enhancement layer signal constellations in hierarchical modulation modes B and Q, respectively.

FIG. 4A and FIG. 4B are constellations showing odd-numbered symbols and even-numbered symbols that are hierarchically modulated in the hierarchical modulation mode B, respectively.

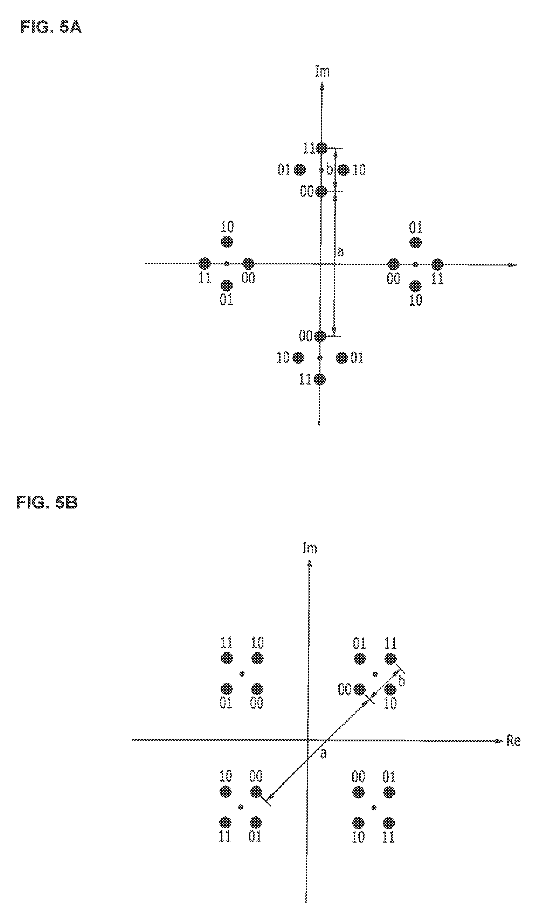

FIG, 5A and FIG. 5B are constellations showing odd-numbered symbols and even-numbered symbols that are hierarchically modulated in the hierarchical modulation mode Q, respectively.

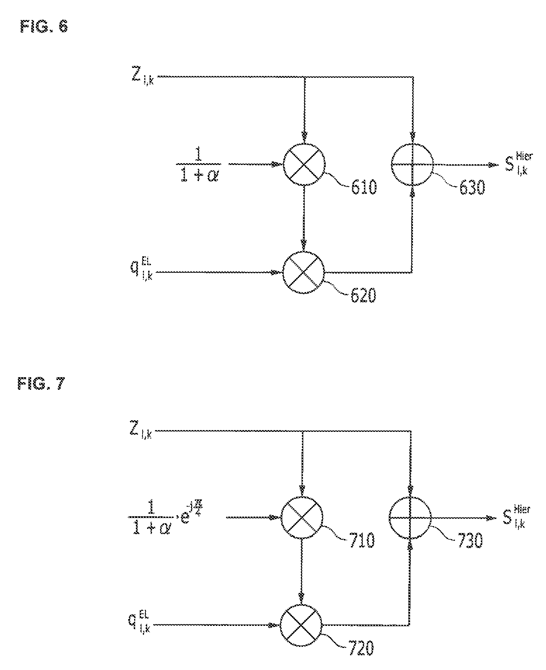

FIG. 6 and FIG. 7 are schematic diagrams of hierarchical modulators according to an embodiment of the present invention, respectively,

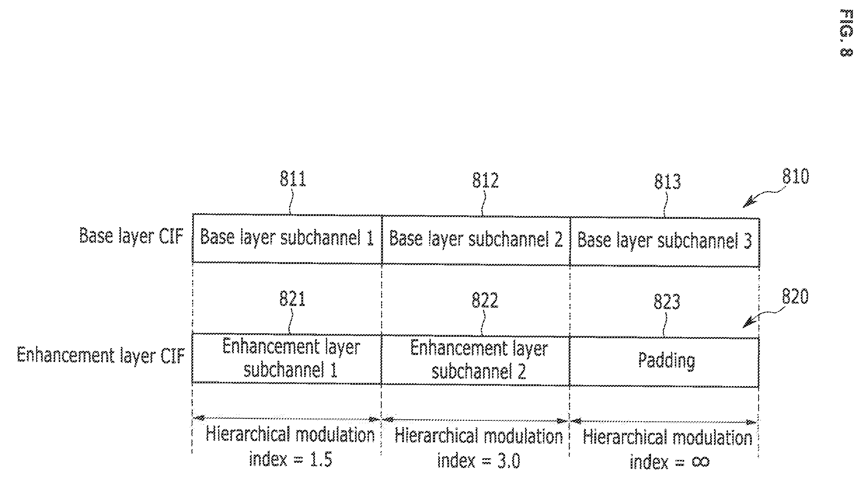

FIG. 8 shows a base layer signal and an enhancement layer signal according to an embodiment of the present invention,

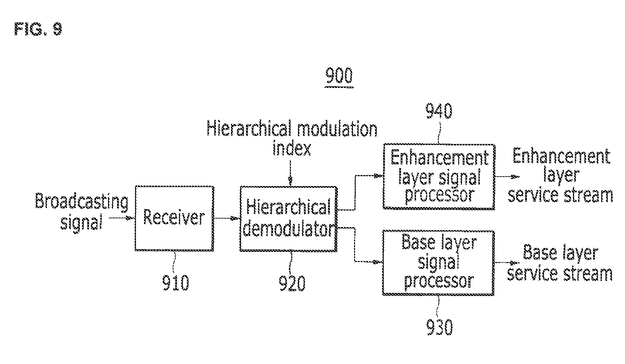

FIG. 9 is a schematic diagram of a receiving broadcasting signal receiving apparatus according to an embodiment of the present invention.

## DETAILED DESK OF THE EMBODIMENTS

In the following detailed description, only certain embodiments of the present invention have been shown and described, simply by way of illustration. As those skilled in the art would realize, the described embodiments may be modified in various different ways, all without departing from the spirit or scope of the present invention. Accordingly, the drawings and description are to be regarded as illustrative in nature and not restrictive. Like reference numerals designate like elements throughout the specification.

In addition, unless explicitly described to the contrary, the word "comprise" and variations such as "comprises" or "comprising" will be understood to imply the inclusion of stated elements but not the exclusion of any other elements.

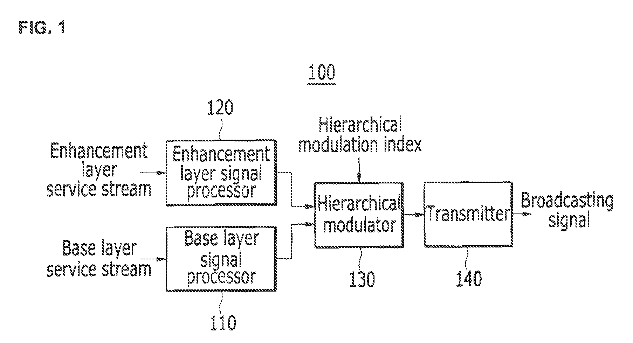

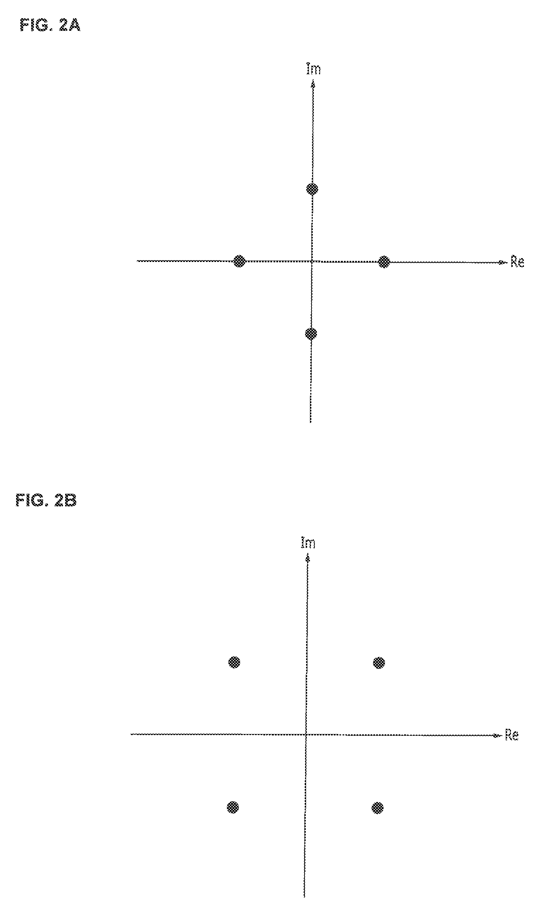

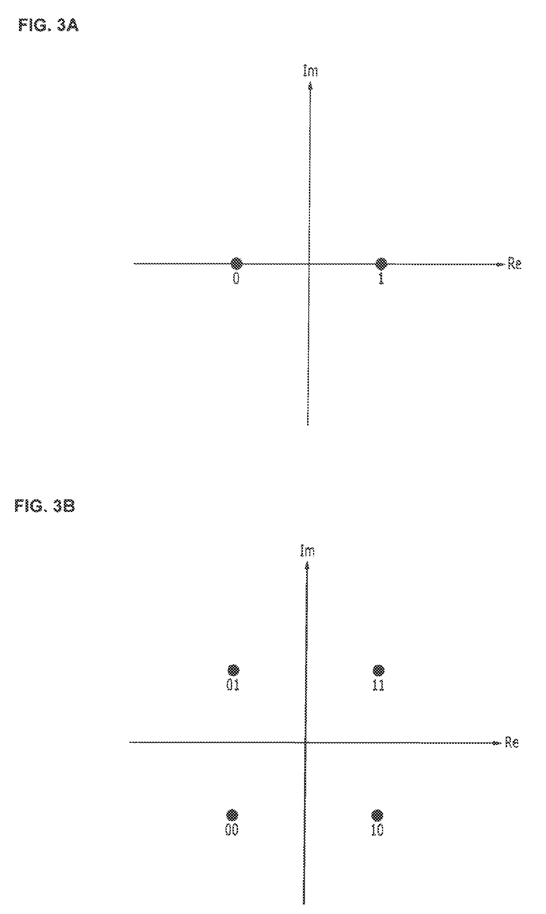

FIG. 1 is a schematic block diagram showing a broadcasting signal transmitting apparatus according to an embodiment of the present invention, FIG. 2A and FIG. 2B are base layer signal constellations, respectively, and FIG. 3A and FIG. 3B are enhancement layer signal constellations in hierarchical modulation modes B and Q, respectively.

Referring to FIG. 1, the broadcasting signal transmitting apparatus 100 includes a base layer signal processor 110, an enhancement layer signal processor 120, a hierarchical modulator 130, and a transmitter 140. The broadcasting signal transmitting apparatus 100 may be, for example, an advanced terrestrial digital multimedia broadcasting (AT-DMB) transmitter. In this case, the base layer may support the terrestrial digital multimedia broadcasting (T-DM8) service and the enhancement layer may be an additional layer to increase transmission capacity of the T-DMB.

The base layer signal processor 110 processes a base layer service stream and generates a base layer signal including a plurality of base layer symbols. In detail, the base layer signal processor 110 performs channel encoding and interleaving for the base layer service stream, and mapping to symbols. For example, the base layer signal processor 110 may modulate the interleaved base layer service stream by $\pi/4$-differential quadrature phase shift keying ($\pi/4$-DQPSK) and map the modulated stream to symbols.

In this case, odd-numbered base layer symbols are on the axes of the constellation as shown in FIG. 2A, and even-numbered base layer symbols are on the points where the odd-numbered symbols are rotated by 45° in the constellation as shown in FIG. 2B.

The enhancement layer signal processor 120 processes an enhancement layer service stream having higher quality than the base layer service stream, and generates an enhancement layer signal including a plurality of enhancement layer symbols. In detail, the enhancement layer signal processor 120 performs channel encoding and interleaving for the enhancement layer service stream, and mapping to symbols. In this case, the enhancement layer signal processor 120 may select one hierarchical modulation mode among a plurality of modulation modes depending on circumstances, and generates the enhancement layer signal by using the selected modulation mode. For example, in the hierarchical modulation mode B, the enhancement layer signal processor 120 may map the interleaved enhancement layer service stream to symbols in accordance with binary phase shift keying (BPSK) as shown in FIG. 3A. Further, in the hierarchical modulation mode Q, the enhancement layer signal processor 120 may map the interleaved enhancement layer service stream to symbols in accordance with quadrature phase shift keying (QPSK) as shown in FIG. 3B.

The hierarchical modulator 130 performs hierarchical modulation on the base layer signal and the enhancement layer signal in accordance with the hierarchical modulation index, and generates a hierarchical modulation signal including a plurality of hierarchical modulation symbols. The hierarchical modulation index may be a vector having values corresponding to each of the plurality of subchannels.

The transmitter 140 transmits a broadcasting signal obtained by performing multiplexing, for example orthogonal frequency division multiplexing (OFDM), on the hierarchical modulation signal.

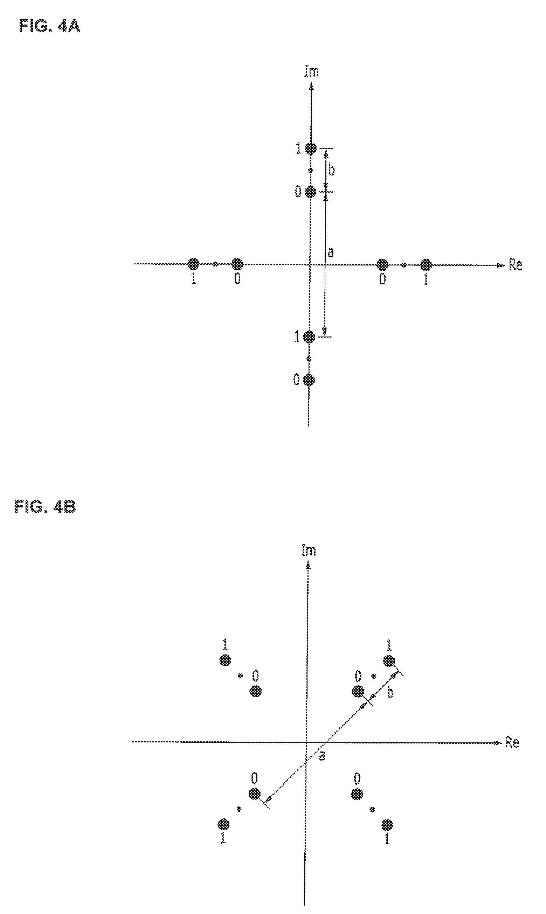

Hereinafter, the hierarchical modulation in the hierarchical modulator 130 will be described with reference to FIG. 4 to FIG. 7.

FIG. 4A and FIG. 4B are constellations showing odd-numbered symbols and even-numbered symbols that are hierarchically modulated in the hierarchical modulation mode B, respectively, FIG. 5A and FIG. 5B are constellations showing odd-numbered symbols and even-numbered symbols that are hierarchically modulated in the hierarchical modulation mode Q, respectively, and FIG. 6 and FIG. 7 are schematic diagrams of hierarchical modulators according to an embodiment of the present invention, respectively.

Referring to FIG. 4A and FIG. 4B, the hierarchical modulator 130 (shown in FIG. 1) generates the hierarchical modulation symbol by combining a $\pi$/4-DQPSK modulated base layer symbol to a BPSK modulated enhancement layer symbol in the hierarchical modulation mode B. Referring to FIG. 5A and FIG. 5B, the hierarchical modulator 130 generates the hierarchical modulation symbol by combining the $\pi$/4-DQPSK modulated base layer symbol to a QPSK modulated enhancement layer symbol in the hierarchical modulation mode Q.

At this time, the hierarchical modulation index $\alpha$ defines a distance between a base layer symbol and an enhancement layer symbol. Specifically, the hierarchical modulation index $\alpha$ may be defined as a ratio (a/b) of the distance (a) between the enhancement layer symbols and the distance (b) between the base layer symbols on the constellation of the hierarchical modulation symbols, and may have a value of 1.5, 2.0, 2.5, 3.0, and the like. Here, the distance (b) between the base layer symbols is defined as the distance between two enhancement layer symbols that are added to two base layer symbols, respectively, as shown in FIG. 4A to FIG. 5B.

Referring to FIG. 6, in the hierarchical modulation mode B, the hierarchical modulator 130 adjusts the magnitude of the BPSK modulated enhancement layer symbol, and generates the hierarchical modulation symbol by adding the adjusted enhancement layer symbol to the base layer symbol. In detail, multipliers 610 and 620 of the hierarchical modulator 130 adjust the magnitude and angle through multiplying the enhancement layer symbol $q_{l,k}^{EL}$ by a reciprocal (1/(1+$\alpha$)) of the added value of the hierarchical modulation index $\alpha$ and 1, and by the base layer symbol $z_{l,k}$. An adder 630 generates the hierarchical modulation symbol $S_{l,k}^{Hier}$ by adding the adjusted enhancement layer symbol to the base layer symbol

Referring to FIG. 7, in the hierarchical modulation mode Q, the hierarchical modulator 130 adjusts the QPSK modulated enhancement layer symbol by rotating it and modifying its magnitude, and generates the hierarchical modulation symbol by adding the adjusted enhancement layer symbol to the base layer symbol. In detail, multipliers 710 and 720 of the hierarchical modulator 130 adjust the magnitude and angle through multiplying the enhancement layer symbol $q_{l,k}^{EL}$ by a reciprocal (1/(1+$\alpha$)) of the added value of the hierarchical modulation index $\alpha$ and 1, and by the base layer symbol $z_{l,k}$, and further rotates the enhancement layer symbol $q_{l,k}^{EL}$ by -45°. An adder 730 of the hierarchical modulator 130 generates the hierarchical modulation symbol $S_{l,k}^{Hier}$ by adding the adjusted enhancement layer symbol to the base layer symbol $z_{l,k}$.

In FIG. 6 and FIG. 7, the multiplication of the enhancement layer symbol $q_{l,k}^{EL}$ and the base layer symbol $z_{l,k}$ means rotating the enhancement layer symbol $q_{l,k}^{EL}$ by the angle formed between the base layer symbol $z_{l,k}$ and the real axis Re. The hierarchical modulation symbol $S_{l,k}^{Hier}$ generated by the hierarchical modulator 130 of FIG. 6 and FIG. 7 may be represented as in Equations 1 and 2.

$$S_{l,k}^{Hier} = z_{l,k} + \frac{1}{1+\alpha} \cdot q_{l,k}^{EL} \cdot z_{l,k} \quad \text{for } l = 2,3,...,L \text{ and } -\frac{K}{2} \leq k \leq \frac{K}{2}$$

$$S_{l,k}^{Hier} = z_{l,k} + \frac{1}{1+\alpha} \cdot q_{l,k}^{EL} \cdot z_{l,k} \cdot e^{-j\frac{\pi}{4}} \quad \text{for } l = 2,3,...,L \text{ and } -\frac{K}{2} \leq k \leq \frac{K}{2}$$

Here, l is a symbol index, and k is a subcarrier index.

Hereinafter, the hierarchical modulation index according to an embodiment of the present invention will be described referring to FIG. 8.

FIG. 8 shows a base layer signal and an enhancement layer signal according to an embodiment of the present invention.

Referring to FIG. 8, when the base layer signal processor 110 (shown in FIG. 1) and the enhancement layer signal processor 120 (shown in FIG. 1) apply time interleaving to the base layer service stream and the enhancement layer service stream, respectively, each of the base layer signal and the enhancement layer signal includes at least one common interleaved frame (CIF) 810 or 820. Each CIFs 810 and 820 includes a plurality of subchannels 811, 812, 813 or 821 and 822, and each of the subchannels includes a plurality of capacity units (CU) (not shown).

Each of the subchannels 811 to 813 of the base layer CIF 810 includes the base layer service stream data, and each of the subchannels 821 and 822 of the enhancement layer CIF 820 includes the enhancement layer service stream data corresponding to the base layer service stream. Meanwhile, when the enhancement layer CIF 820 is not filled with subchannels, including data, a section 823 not filled with a subchannel is padded.

The hierarchical modulator 130 (in FIG. 1) performs hierarchical modulation by applying a hierarchical modulation index to each subchannel. For example, the hierarchical modulator 130 may hierarchically modulate the base and enhancement layer symbols included in the subchannel 1 (811 and 821) with the hierarchical modulation index of 1.5, and the base and enhancement layer symbols included in the subchannel 2 (812 and 822) with the hierarchical modulation index of 3.0. When there is no corresponding enhancement layer signal data as shown in the subchannel 3 (813), the hierarchical modulator 130 performs the hierarchical modulation with the hierarchical modulation index of infinity (∞). As known from Equations 1 and 2, when the hierarchical modulation index is infinity, the hierarchical modulation symbol is the same as the π/4-DQPSK modulated base layer symbol.

When the hierarchical modulation index of the subchannel 2 is set to be larger than the hierarchical modulation index of the subchannel 1, it is possible to obtain broad service coverage for the enhancement layer of the subchannel 1 due to the high receiving performance, but it becomes difficult to obtain broad service coverage for the enhancement layer of the subchannel 2. However, since it is possible to obtain broader service coverage for the base layer of the subchannel 2 than the base layer of the subchannel 1, a service that is similar to the conventional system (for example, T-DMB) providing only a base layer service may be provided for the subchannel 2. As described above, when the enhancement layer service does not require broad service coverage, receiving performance degradation for the system providing only the base layer service may be minimized by setting the hierarchical modulation index to be high. In addtion, by setting the hierarchical modulation index as infinity in the section where there is no enhancement layer service as the subchannel 3, the present invention can provide the same effect as the system not using the hierarchical modulation. Therefore, the same receiving performance may be obtained as the existing system providing only the base layer service, and the inverse compatibility is guaranteed.

However, in FIG. 8, the hierarchical modulation index is described to be set per subchannel, but it is possible to apply the hierarchical modulation index of infinity only to the subchannel not including the enhancement layer service stream data and to apply the same hierarchical modulation indices to other subchannels,

In addtion, the hierarchical modulation index may be determined by a controller (not shown) of the broadcasting signal transmitting apparatus, and the broadcasting signal transmitted by the transmitter 140 (shown in FIG. 1) may include information on the hierarchical modulation index.

Hereinafter, a broadcasting signal receiving apparatus according to an embodiment of the present invention will be described with reference to FIG. 9.

FIG. 9 is a schematic block diagram of a receiving broadcasting signal receiving apparatus according to an embodiment of the present invention.

Referring to FIG. 9, the broadcasting signal receiving apparatus 900 includes a receiver 910, a hierarchical demodulator 920, a base layer receiving processor 930, and an enhancement layer receiving processor 940,

The receiver 910 performs demodulation, for example OFDM demodulation, on the received broadcasting signal, and outputs the hierarchically modulated signal. The receiver 910 may extract information on the hierarchical modulation index by demodulating the broadcasting signal.

The layer demodulator 920 performs hierarchical demodulation on the layer modulated signal in accordance with the hierarchical modulation index, and outputs the base layer signal and the enhancement layer signal,

The base layer receiving processor 930 performs signal processing on the base layer signal and outputs a base layer service stream. Specifically, the base layer receiving processor 930 may perform demapping of the base layer signal, and deinterleaving and channel decoding on the demapped base layer signal, and may output the base layer service stream.

The enhancement layer receiving processor 940 performs signa! processing on the enhancement layer signal and outputs an enhancement layer service stream. Specifically, the enhancement layer receiving processor 940 may perform demapping of the enhancement layer signal, and deinterleaving and channel decoding on the demapped enhancement layer signal, and may output the enhancement layer service stream.

As described above, according to an embodiment of the present invention, in a section not including the enhancement layer service, the same receiving performance as the existing system providing only the base layer service can be obtained.

According to another embodiment of the present invention, when the enhancement layer service does not require broad service coverage, the receiving performance degradation for the system providing only the base layer service can be minimized.

Embodiments of the present invention are not embodied only by a method and apparatus. Alternatively, the embodiments may be embodied by a program performing functions that correspond to the configuration of the embodiment of the present invention, or a recording medium on which the program is recorded.

While this invention has been described in connection with what is presently considered to be practical embodiments, it is to be understood that the invention is not limited to the disclosed embodiments, but, on the contrary, is intended to cover various modifications and equivalent arrangements included within the spirit and scope of the appended claims.

**Claims**

**1.** A method of transmitting broadcasting signal in a broadcasting signal transmitting apparatus, the method comprising:

generating a base layer signal including a plurality of subchannels, each of the subchannel including a base layer symbol;
generating an enhancement layer signal including an enhancement layer symbol;
generating a hierarchical modulation symbol by performing hierarchical modulation on the base layer symbol and the enhancement layer symbol in accordance with a hierarchical modulation index, in a first subchannel corresponding to a section in which the enhancement layer signal has data among the plurality of subchannels;
outputting the base layer symbol, in a second subchannel corresponding to a section in which the enhancement layer signal does not have data among the plurality of subchannels; and
transmitting a broadcasting signal including the hierarchical modulation symbol of the first subchannel and the base layer symbol of the second subchannel.

**2.** The method of claim 1, wherein the outputting the base layer symbol comprises outputting the base layer symbol without performing the hierarchical modulation in the second subchannel.

**3.** The method of claim 1, wherein the outputting the base layer symbol comprises outputting the base layer symbol by performing the hierarchical modulation on the base layer symbol and the enhancement layer symbol with the hierarchical modulation index of infinity.

4. A method of receiving a broadcasting signal in a broadcasting signal receiving apparatus, the method comprising:

receiving a broadcasting signal;
outputting a hierarchical modulation signal by demodulating the broadcasting signal; and
demodulating the hierarchical modulation signal to a base layer signal and an enhancement layer signal,
wherein the hierarchical modulation signal includes a hierarchical modulation symbol that is generated by performing hierarchical modulation on the base layer symbol and the enhancement layer symbol in a first subchannel, and the base layer symbol of a second subchannel,
wherein the first subchannel corresponds to a section in which the enhancement layer signal has data among a plurality of subchannels, and the second subchannel corresponds to a section in which the enhancement layer signal does not have data among the plurality of subchannels.

5. The method of claim 4, wherein the demodulating the hierarchical modulation signal comprises demodulating the hierarchical modulation signal to the base layer signal and the enhancement layer signal in accordance with a hierarchical modulation index.

6. The method of any one of claims 1 to 3 and 5, wherein the hierarchical modulation index defines a distance between the base layer symbol and the enhancement layer symbol.

7. The method of any one of the preceding claims 1 to 3, 5 and 6, wherein the hierarchical modulation index increases as a distance between base layer symbols increases, and decreases as a distance between enhancement layer symbols increases.

8. The method of any one of the preceding claim 1 to 3 and 5 to 7, wherein the hierarchical modulation index is defined in each of the plurality of subchannels.

9. The method of any one of the preceding claims, wherein the hierarchical modulation is performed by adding, to the base layer symbol, a product of the enhancement layer symbol, a value which is inversely proportional to the hierarchical modulation index, and the base layer symbol.

10. The method of any one of the preceding claims, wherein the broadcasting signal further comprises information on the hierarchical modulation index.

11. An apparatus for transmitting a broadcasting signal, the apparatus comprising:

a base layer signal processor configured to generate a base layer signal including a plurality of subchannels., each of the subchannels including a base layer symbol;
an enhancement layer signal processor configured to generate an enhancement layer signal including an enhancement layer symbol;
a hierarchical modulator configured to perform hierarchical modulation on the base layer symbol and the enhancement layer symbol in a first subchannel corresponding to a section in which the enhancement layer signal has data among a plurality of subchannels, and configured not to perform the hierarchical modulation on the base layer symbol and the enhancement layer symbol in a second subchannel corresponding to a section in which the enhancement layer signal does not have data among the plurality of subchannels; and
a transmitter configured to transmit a broadcasting signal including output from the hierarchical modulator.

12. An apparatus for receiving a broadcasting signal, the apparatus comprising:

a receiver configured to output a hierarchical modulation signal by demodulating a received broadcasting signal; and
a hierarchical demodulator configured to demodulate the hierarchical modulation signal to a base layer signal and an enhancement layer signal,
wherein the hierarchical modulation signal includes a hierarchical modulation symbol that is generated by performing hierarchical modulation on the base layer symbol and the enhancement layer symbol in a first subchannel, and the base layer symbol of a second subchannel,
wherein the first subchannel corresponds to a section in which the enhancement layer signal has data among a plurality of subchannels, and the second subchannel corresponds to a section in which the enhancement layer signal does not have data among the plurality of subchannels.

13. The apparatus of claim 11 or 12, wherein the hierarchical modulation is performed in accordance with a hierarchical modulation index, and the hierarchical modulation index defines a distance between the base layer symbol and the enhancement layer symbol.

14. The apparatus of claim 13, wherein the hierarchical modulation does not performed in the second suchannel by setting the hierarchical modulation index of the second subchannel to infinity.

15. The apparatus of any one of claims 13 and 14, wherein the hierarchical modulation index increases as the distance between base layer symbols increases, and decreases as the distance between the enhancement layer symbols increases,
wherein the magnitude of the enhancement layer symbol is adjusted by multiplying the enhancement layer symbol by a value that is inversely proportional to the hierarchical modulation index when the hierarchical modulation is performed.

FIG. 1

FIG. 2A

FIG. 2B

FIG. 3A

FIG. 3B

FIG. 4A

FIG. 4B

FIG. 5A

FIG. 5B

FIG. 6

$$Z_{l,k}$$

$$\frac{1}{1+\alpha}$$

$$\bigotimes \quad 610$$

$$q_{l,k}^{EL}$$

$$\bigotimes \quad 620$$

$$\bigoplus \quad 630 \quad S_{l,k}^{Hier}$$

FIG. 7

$$Z_{l,k}$$

$$\frac{1}{1+\alpha} \cdot e^{j\frac{\pi}{4}}$$

$$\bigotimes \quad 710$$

$$q_{l,k}^{EL}$$

$$\bigotimes \quad 720$$

$$\bigoplus \quad 730 \quad S_{l,k}^{Hier}$$

FIG. 8

810

811 Base layer subchannel 1
812 Base layer subchannel 2
813 Base layer subchannel 3

Base layer CIF

820

821 Enhancement layer subchannel 1
822 Enhancement layer subchannel 2
823 Padding

Enhancement layer CIF

Hierarchical modulation index = 1.5
Hierarchical modulation index = 3.0
Hierarchical modulation index = ∞

FIG. 9

900